# EUROPEAN PATENT APPLICATION

(11) **EP 1 940 057 A2**
(43) Date of publication of application: **02.07.2008**
(21) Application number: 07124068.3
(22) Date of filing: 26.12.2007
(51) Int. Cl.: H04H 60/73

(54) **Apparatus and method for processing data broadcast signal**

(30) Priority: 27.12.2006 KR 20060135355
(71) Applicant: LG Electronics, Inc., Seoul 150-721 (KR)
(72) Inventor: Lee, Ki Hwa, 137-724 Seoul (KR)
(74) Representative: Cabinet Plasseraud

(57) **Abstract**

An apparatus and method for receiving and processing a data broadcast signal supported by a data broadcast platform is disclosed. Upon receiving a data broadcast signal including an application information table and an application, the apparatus detects property information indicating a property of the application from the application information table, and controls an additional service of the application on the basis of the detected application property information. Therefore, the apparatus may provide a variety of application services based on different application properties.

## Description

This application claims the benefit of Korean Patent Application No. 10-2006-0135355, filed on December 27, 2006, which is hereby incorporated by reference as if fully set forth herein.

### BACKGROUND OF THE INVENTION

### Field of the Invention

The present invention relates to an apparatus and method for processing a data broadcast signal, and more particularly to an apparatus and method for receiving a data broadcast signal including property information of an application.

### Discussion of the Related Art

Recently, with the rapidly increasing development of digital broadcasting technology, a broadcast station transmits not only video and audio broadcast signals but also various data broadcast signals, or transmits the video and audio broadcast signals separately from the data broadcast signals.

There are a variety of data broadcast application platforms, i.e., an Open Cable Application Platform (OCAP), a Multimedia Home Platform (MHP), and an Advanced Common Application Platform (ACAP), etc.

For example, the OCAP is an application platform for North American cable data broadcasting, the MHP is an application for European data broadcasting, and the ACAP is an application platform for North American terrestrial data broadcasting.

The above-mentioned platforms are based on the Application Information Table (AIT). The AIT is a table for describing the data broadcast application and its associated information.

In the case of executing the data broadcast application using a current application information table (AIT), the conventional art can perform only the mapping between the channel and the application irrespective of the application property, however, it cannot provide a variety of additional services based on the application properties.

### SUMMARY OF THE INVENTION

Accordingly, the present invention is directed to an apparatus and method for processing a data broadcast signal that substantially obviate one or more problems due to limitations and disadvantages of the

### related art.

An object of the present invention is to provide a data broadcast processing apparatus for providing a variety of additional services based on application property information, and a method for processing the same.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a method for receiving and processing a data broadcast signal supported by a data broadcast platform comprises: receiving a data broadcast signal including an application information table and an application; detecting property information indicating a property of the application from the application information table; and controlling an additional service of the application on the basis of the detected application property information.

In another aspect of the present invention, there is provided an apparatus for receiving and processing a data broadcast signal supported by a data broadcast platform comprising: a receiver for receiving a data broadcast signal including an application information table and an application; a decoder for decoding the received application information table and the received application; and an application controller for detecting property information indicating a property of the application from the decoded application information table, and controlling an additional service of the application on the basis of the detected application property information.

Preferably, the application property information includes at least one of recordable information, execution rating information, category information, and runtime information.

As a result, the present invention can provide a variety of application services based on different application properties.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a hierarchical diagram illustrating a broadcast receiver for processing an application according to the present invention;

FIG. 2 is a flow chart illustrating a method for processing a data broadcast signal according to the present invention;

FIG. 3 is a flow chart illustrating operations performed when the application property information includes recordable information according to the present invention;

FIG. 4 is a structural diagram illustrating a syntax structure of an application information table (AIT) according to the present invention;

FIG. 5 is a structural diagram illustrating a syntax structure of an application property descriptor according to the present invention;

FIG. 6 shows an exemplary additional service based on the application property information according to the present invention; and

FIG. 7 is a block diagram illustrating a data broadcast receiver according to the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

Prior to describing the present invention, it should be noted that most terms disclosed in the present invention correspond to general terms well known in the art, but some terms have been selected by the applicant as necessary and will hereinafter be disclosed in the following description of the present invention. Therefore, it is preferable that the terms defined by the applicant be understood on the basis of their meanings in the present invention.

For the convenience of description and better understanding of the present invention, general structures and devices well known in the art will be omitted or be denoted by a block diagram or a flow chart. Wherever possible, the same reference numbers will be used throughout the drawings to refer to the same or like parts.

Prior to describing the present invention, the present invention allows a data broadcast receiving apparatus (or receiver) to provide an additional service of a corresponding data broadcast application according to property information of a data broadcast application.

For this purpose, a transmission end of the present invention includes property information of a data broadcast application in an application information table (AIT), and transmits the application information table (AIT) including the property information of the data broadcast application.

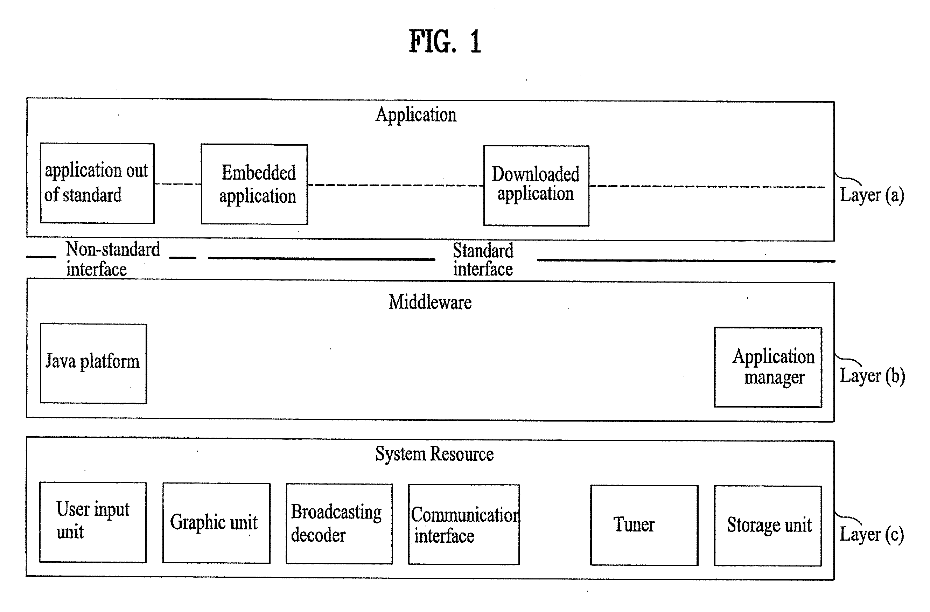

FIG. 1 is a hierarchical diagram illustrating a broadcast receiver for processing an application according to the present invention.

Referring to FIG. 1, the broadcast receiver according to the present invention includes an application layer (a), a system software layer (b), and a system resource layer (c).

The system resource layer (c) includes a variety of hardware and software resources contained in the broadcast receiver.

The system resource may include a user input unit, a graphic unit, a broadcast decoder, a communication interface, a tuner, and a storage unit (or a storage medium).

The storage unit may be a memory card, a disc, and a Hard Disc Drive (HDD), etc. In this case, the system resource may be implemented with hardware or software according to implementations of the broadcast receiver.

For example, a broadcast decoder may be implemented with hardware or software according to categories of the broadcast receiver. The broadcast receiver may include other resources different from the resource of FIG. 1.

In other words, upon receiving broadcast contents including the data broadcast application, the broadcast receiver processes the received broadcast contents via function blocks contained in the system resource layer (c). For example, the tuner receives the broadcast contents over the selected channel, and the broadcast decoder may decode the received broadcast contents.

The system software layer (b) manages/controls overall system resources between the lower system resource and the upper application. The system software layer (b) may perform the application using different broadcast receivers without any change. And, the system software layer (b) transmits high-level functions to the application using low-level lower system resources.

The system software layer (b) may include an application manager and a data broadcast application platform. A manager of the application receives, performs, and manages the application. The system software layer (b) may include the application manager, the application platform, and other system software constituent elements. In one embodiment, the application platform is based on Java.

In this case, the system software may be called a middleware engine. The middleware engine is implementation with software, which receives the applications over a broadcast network or a communication network, and interconnects the applications, so that data communication is performed between the applications.

The middleware engine provides the application with the high-level API (Application Programming Interface) and services using hardware and operation systems of the system resource. For example, the application manager controls the middleware-based application.

The application of the application layer (a) is indicative of software, which is operated by both the execution environment defined by the middleware and the application interface (i.e., API (Application Programming Interface)).

The applications may be received or downloaded via the broadcast- or communication- network. The applications may also be downloaded via interfaces (e.g., USB interface) other than the broadcast network or communication network. The applications may be embedded in the broadcast receiver according to a predetermined scheme, or may also be embedded or downloaded in the same broadcast receiver according to other schemes.

In this case, the application information table (AIT) along with the application may be received or downloaded over the broadcast network or communication network.

The transmission end of the present invention includes application property information, and transmits the resultant property information to the broadcast receiver. The middleware engine of the broadcast receiver extracts the application property information form the received application information table (AIT), and provides a variety of additional services on the basis of the extracted property information. In this case, reception of the application information table (AIT) may include the downloading concept.

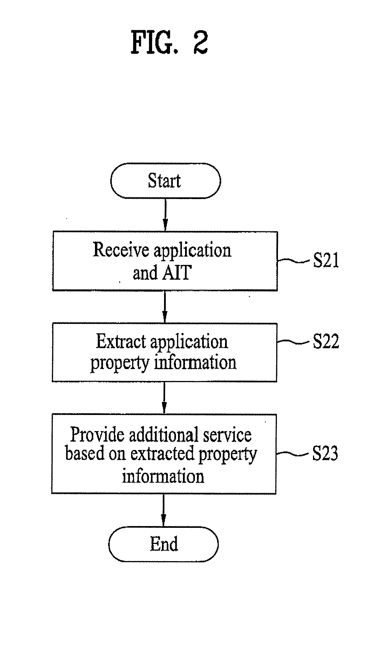

FIG. 2 is a flow chart illustrating a method for processing a data broadcast signal according to the present invention.

Referring to FIG. 2, upon receiving a data broadcast signal including an application information table (AIT) and a data broadcast application at step S21, a broadcast receiving apparatus (or broadcast receiver) extracts application property information indicating the application property from the received application information table (AIT) at step S22. And, the receiving apparatus controls an additional service of a corresponding application according to the extracted application property information at step S23.

In this case, the application information table (AIT) or the application may be divided into several data pieces, so that it can be received in the form of divided data pieces because the broadcast station may not transmit data composed of a single complete file to a destination at one time. In addition, it should be noted that the broadcast station may configure the application information table (AIT) or the application in the form of single complete data, and then may transmit the application information table (AIT) or the application composed of the single complete data.

For example, the application information table (AIT) includes a basic unit called a section, and is divided into at least one section, so that the divided sections are transmitted to a destination. Therefore, the broadcast collects the divided sections, so that it configures a single application information table (AIT).

The application information table (AIT) may include property information of at least one application. The application property information is configured in the form of a field format or descriptor format, and is then contained in the application information table (AIT).

For the convenience of description, a specific field for describing application property information is called an application property field, and a descriptor for describing the application property information is called an application property descriptor.

The application property information may indicate the application property supported by the data broadcast platform. For example, the application property information may indicate recordable information, execution grade information (i.e., execution rating information), application category information, and application runtime information, etc.

In other words, the above-mentioned application property information may also be called the application execution property information supplied from a headend such as a broadcast station. The property information may indicate a plurality of properties associated with a single application, or may indicate only some parts of the properties.

If the application property information is extracted from the received application information table (AIT), the broadcast receiver controls the additional service of a corresponding application on the basis of the extracted application property information. In this case, the additional service may be based on the application property information.

For example, a variety of additional services can be applied to the present invention using various application property information (e.g., recordable information, execution rating information, application category information, and application runtime information, etc.).

The applicable additional services can be made using the above-mentioned exemplary application property information (i.e., recordable information, execution rating information, application category information, and application runtime information), and detailed description thereof will hereinafter be described.

If the application property information includes the recordable information, the broadcast receiver may receive a user selection signal indicating whether the application is stored or not.

In other words, if the property information indicates that the corresponding application is recordable, the broadcast receiver may display the OSD (On Screen Display) to receive a recording selection signal of the user.

Upon receiving the user's recording selection signal associated with the application, the broadcast receiver stores the corresponding application in a storage medium. Them, if the user transmits a request for executing the application stored in the storage medium, the middleware engine executes the stored application.

The recordable information may be specific information associated with the correlation between the application and the broadcast stream. For example, if the corresponding application is indicative of specific information associated with a realtime broadcast stream, the apparatus according to the present invention may indicate a non- recordable status using the corresponding application property information. Provided that the corresponding application is not related to a realtime broadcast stream, and the application can be independently executed, the apparatus may indicate the recordable status.

In one embodiment, the non-recordable application may be a weather application or a security application, because the weather application or the security application is of importance to realtime data.

In this way, the application property information according to the present invention may provide information indicating a recordable or non-recordable status. If the application property information includes recordable information, the broadcast receiver may not store a corresponding application in the storage medium, and may provide an additional service, which receives the recording selection signal of the corresponding application from the user and stores the received selection signal in the storage medium.

In other words, the present invention stores the user-selected application associated with the recordable application, instead of recording the application decided by the broadcast station.

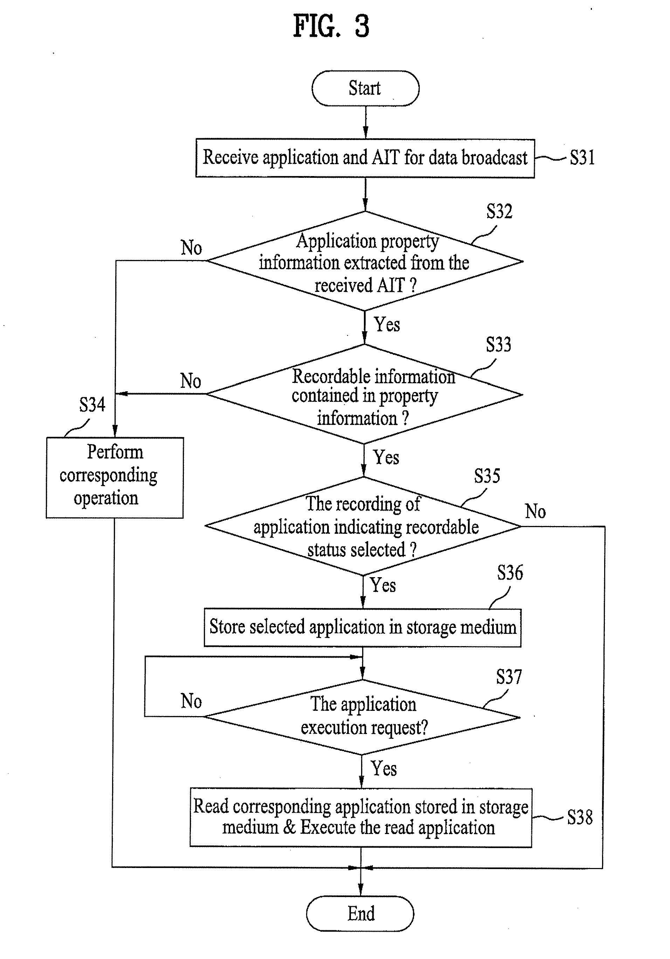

FIG. 3 is a flow chart illustrating operations performed when the application property information includes recordable information according to the present invention.

Referring to FIG. 3, upon receiving an application and an application information table (AIT) for data broadcast at step S31, a broadcast receiving apparatus (or a broadcast receiver) according to the present invention detects the application property information from the received application information table (AIT) at step S32. If the application property information is detected at step S32, the receiving apparatus determines whether the detected application property information includes recordable information at step S33.

If the application property information is not detected at step S32 or the application property information is not included recordable information at step S33, the receiving apparatus performs corresponding operations at step S34. For example, the receiving apparatus may store information parsed from the application information table (AIT), or may perform operations corresponding to other property information.

If the application property information includes recordable information at step S33, and the user selects the recording of the application indicating the recordable status at step S35, the receiving apparatus stores the corresponding application in the storage medium at step S36.

Namely, if the application property information includes the recordable information, the receiving apparatus may receive the user selection signal indicating the recordable or non-recordable status of the corresponding application. For example, the receiving apparatus may inform the user of the recordable status of the corresponding application using the OSD function, and may receive the application recording selection signal from the user.

When the receiving apparatus informs the user of the recordable application and the user selects the recordable or non-recordable status, the application information table (AIT) is detected from the application information table (AIT), or the corresponding application is executed. For example, when the execution of the application indicating the recordable status begins, when the execution of the application is terminated, or while the application is executed, the apparatus may inform the user of the recordable application and the user may select the recordable or non-recordable status.

Upon receiving the recording selection signal from the user at step S35, the selected application is stored in the storage medium at step S36. Then, if the user transmits a request for executing the application at step S37, the receiving apparatus reads a corresponding application from several applications stored in the storage medium, and executes the read application at step S38.

In the meantime, the application property information detected from the application information table (AIT) may include the execution rating information of the application. The application execution rating information may be considered to be viewable user-age information.

In other words, the apparatus may display the viewable user-age information of the corresponding application on the basis of the application execution rating information. Otherwise, the apparatus may use the application execution rating information in order to perform a variety of viewing-restricted functions (also called RRT (Rating Region field) functions).

The application property information may include application category information. The application category information may be genre information of a corresponding application.

For example, provided that the applications are classified into a weather genre, a shopping genre, and a game genre, etc., and the genre information is indicated by application category information, the apparatus may perform the above-mentioned genres of the individual categories separately from each other, and may provide the lists of the individual categories. In other words, the broadcast receiver may provide the application list associated with the weather, or may provide the application list associated with the shopping or game.

In this case, if the user selects at least one category, the broadcast receiver scans the received application information table (AIT), and may execute the application corresponding to the selected category. In other words, the apparatus may search for the application for each category, and may execute this application for each category. Also, if the user selects a single category, the apparatus may search for a corresponding category, and may provide the preview of the retrieved application.

The application property information may include the application runtime information. In this case, the application runtime information may indicate the start time (start_time) of the application, the end time (end_time) of the application, and the duration of the application. The apparatus may provide an additional service associated with time information (e.g., a reserved recording time) using the above-mentioned application runtime information.

In other words, if the sue selects the recording signal of the application, the apparatus may perform the reserved recording function on the basis of the application runtime information.

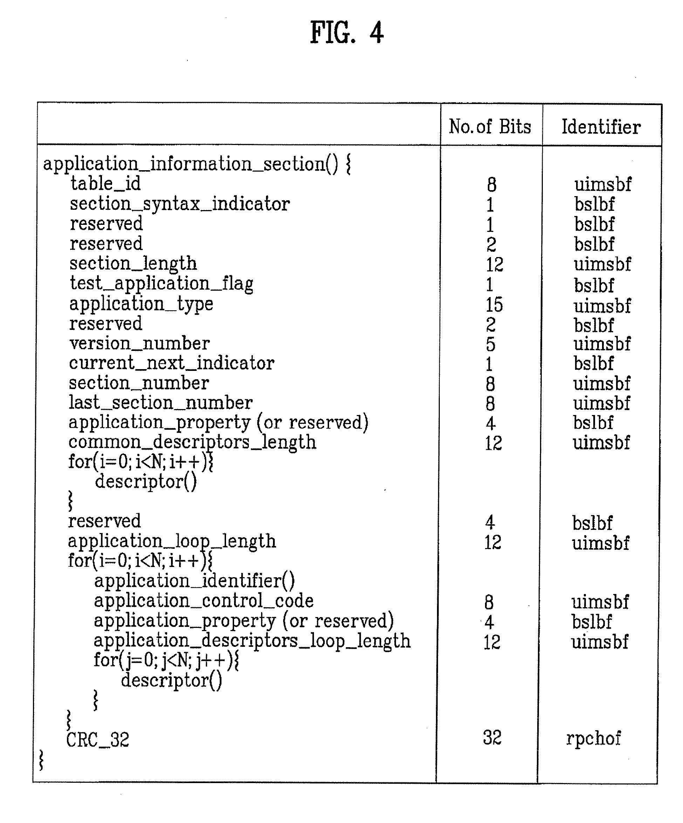

FIG. 4 is a structural diagram illustrating a syntax structure of an application information table (AIT) according to the present invention.

Referring to FIG. 4, the "table_id" field describes a unique table ID allocated to the AIT, so that it can identify the application information table (AIT).

The "application_type" field describes the type of the data broadcast application described in the corresponding application information table (AIT). For example, the "application_type" field may indicate whether a corresponding application is equal to the DVB-J application or the DVB-HTML application.

The "common_descriptor_length" field indicates a total length of the descriptors contained in the common loop in the form of bytes.

The "application_loop_length" field indicates a total length of the application loop in the form of bytes.

The "application_identifier()" field indicates a unique ID for identifying a corresponding application contained in the application loop. For example, the "application_identifier()" field may indicate organization identification (ID) information for transmitting the corresponding application, and the application identification (ID) information, etc.

The "application_control_code" field indicates the status of the corresponding application.

The "application_descriptor_loop_length" field indicates a total length of descriptors in the form of bytes.

The application property information according to the present invention may be contained as a field and/or descriptor in the application information table (AIT) of FIG. 4. The application property application and/or the application property descriptor may be contained in at least one of the common and application loops contained in the application information table (AIT).

FIG. 4 shows an example in which the application property field (application_property) is contained in each of the common and application loops. The application property field contained in the common loop is commonly applied to all the applications described in the application information table (AIT). However, the application property information contained in the application loop may be separately applied to each application.

If the application property field (application_property) is not contained in the application information table (AIT), a field at which the application property field will be located must be kept in a reserved field format. No function is allocated to this reserved field for future use, so that an empty space is allocated to the reserved field for the future use.

The application property descriptor may also be contained in at least one of the common and application loops.

Referring to the application information table (AIT) of FIG. 4, the "descriptor()" information may be inserted into only two places. One of the two places is in the common loop, and the other one is in the application loop.

The descriptors contained in the common loop are located behind the "common_descrioptors_length" field. Other descriptors contained in the application loop are located behind the "application_descriptors_loop_length" field.

The application property descriptor contained in the common loop of the application information table (AIT) is commonly applied to all the applications described in the application information table (AIT). However, the other application property descriptor contained in the application loop of the application information table (AIT) is separately applied to each of the applications.

In other words, a single application information table (AIT) may include information of several applications. In this case, the common explanation of the several applications is defined in the common loop, and the explanation of each application is defined in the application loop.

For example, provided that there is an application information table (A) including information of the applications 1, 2, and 3, and there is application property information to be commonly applied to the above applications 1, 2, and 3, the application property field and/or the application property descriptor may be contained in the common loop of the application information table (A).

In this case, the field or descriptor including the application property information may also be contained in the application loop as necessary. However, if there is application property information to be applied to only at least one of the applications 1, 2, and 3, the application property field and/or the application property descriptor is contained in the application loop.

Provided that the broadcast receiver according to the present invention receives the data broadcast application and the application information table (AIT), and detects the application property information from the application information table (AIT), the broadcast receiver controls the additional service of the corresponding application according to the detected application property information.

The application property information may include at least one of recordable information, execution rating information, application category information, and application runtime information.

The recordable information, the execution rating information, the application category information, and the application runtime information may be configured in the form of additional fields so that the additional fields may then be inserted into a target object. Otherwise, the above-mentioned recordable information, the execution rating information, the application category information, and the application runtime information may be simultaneously inserted into a single descriptor.

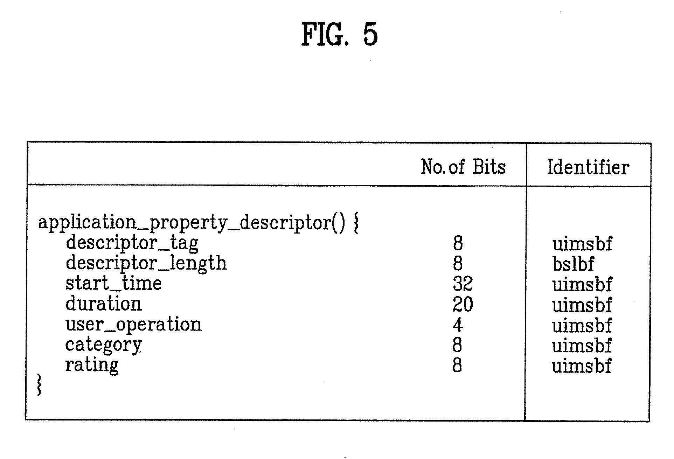

FIG. 5 is a structural diagram illustrating a syntax structure of an application property descriptor "application_property_descriptor()" according to the present invention.

Referring to FIG. 5, the "application_property_descriptor" field may includes the "descriptor_tag" field, the "descriptor_length" field, the "start_time" field, the "duration" field, the "user_opertion" field, the "category" field, and the "rating" field.

In one embodiment, 8 bits are allocated to the "descriptor_tag" field, and the "descriptor_tag" field is allocated with a unique ID value for identifying that the descriptor serves as the application property descriptor.

8 bits are allocated to the "descriptor_length" field, so that the "descriptor_length" field indicates a total length of the application property descriptor.

32 bits are allocated to the "start_time" field, so that the "start_time" field indicates the start time of the corresponding application.

20 bits are allocated to the "duration" field, so that the "duration" field indicates an execution duration time of the corresponding application. Therefore, if the apparatus is able to recognize the value of the "start_time" field and the value of the "duration" field, the apparatus can also recognize the starting time and the end time of the corresponding application.

4 bits are allocated to the "user_opertion" field, so that the "user_opertion" field may display information required for the user's selection. In this embodiment, the present invention may display recordable or non-recordable information in the "user_operation" field.

Although the 4 bits are exemplarily allocated to the "user_operation" field, the "user_operation field" of the present invention may also be composed of bitstreams from "0000" to "1111" as necessary.

For example, if the "user_operation" field value is allocated with "0x0", it is determined that a corresponding application cannot be recordable. If the "user_operation" field value is allocated with "0x1", it is determined that this application is recordable during a service time. If the "user_operation" field value is allocated with "0x2", it is determined that this application is recordable irrespective of the service term. If the "user_operation" field value is allocated with "0x3", it is determined that this application is recordable and can move to another location via an external device.

The above-mentioned values of the "user_operation" field have been disclosed only for illustrative purposes, other values may also be assigned to the "user_operation" field as necessary, and the scope of the present invention is not limited to the above-mentioned exemplary values and can also be applied to other examples.

8 bits are allocated to the "category" field, and this category field may indicate a specific genre. For example, if the category field is classified into a weather category field, a security category field, a game category field, and a shopping category field, "0x00" is assigned to the weather category field, "0x01" is assigned to the security category field, "0x10" is assigned to the game category field, and "0x11" is assigned to the shopping category field.

The above-mentioned values of the "category" field have been disclosed only for illustrative purposes, other values may also be assigned to the "category" field, and the scope of the present invention is not limited to the above-mentioned exemplary values and can also be applied to other examples.

8 bits are allocated to the "rating" field, and the "rating" field may indicate predetermined engaged rating information. For example, the "rating" field may indicate a variety of RRT information (e.g., the age of 12 or more, the age of 15 or more, and the age of 18 or more) by the engaged numbers. For example, the age of 12 or more may be denoted by "0x00", the age of 15 or more may be denoted by "0x01", and the age of 18 or more may be denoted by "0x10".

The order, location, and meaning of the individual fields contained in the application property descriptor, and the number of additionally-allocated fields can be readily modified by those skilled in the art, so that the scope of the present invention is not limited to only the above-mentioned examples and can also be applied to other examples.

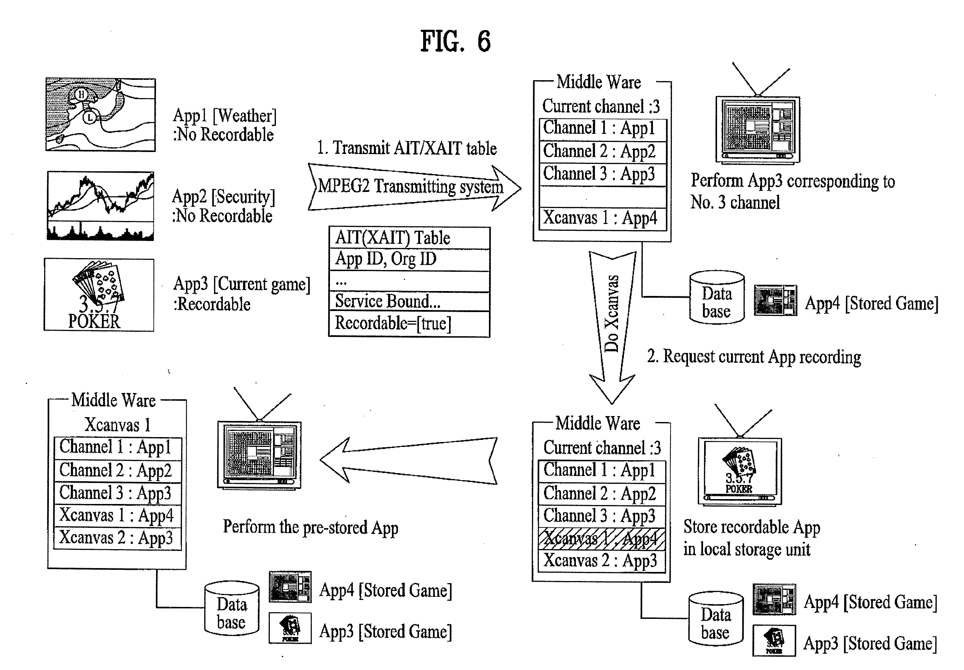

FIG. 6 shows an exemplary additional service based on the application property information according to the present invention.

Referring to FIG. 6, if the data broadcast processing apparatus according to the present invention receives the application information table (AIT) or the XAIT and performs parsing of the received AIT or XAIT, the parsing result shows recordable information (i.e., true information) associated with a third application (App3) from among several applications described in the application information table at step (1).

Then, the middleware engine executes the recordable application (App3). If the user transmits a recording request of the third application (App3) at step (2), the third application (App3) is stored in the storage medium. In this case, it is assumed that a fourth application 4 has already been stored in the storage medium.

The user may select the fourth application 4 or third application 3 stored in the storage medium, and may execute the fourth application 4 or the third application 3.

In this case, there is no need to receive again the selected application from the transmission end.

In other words, the recording of the application including the recordable property information may be selected by the user, and this recording information may be stored in the storage medium. Thereafter, the application stored in the storage medium may be executed if required.

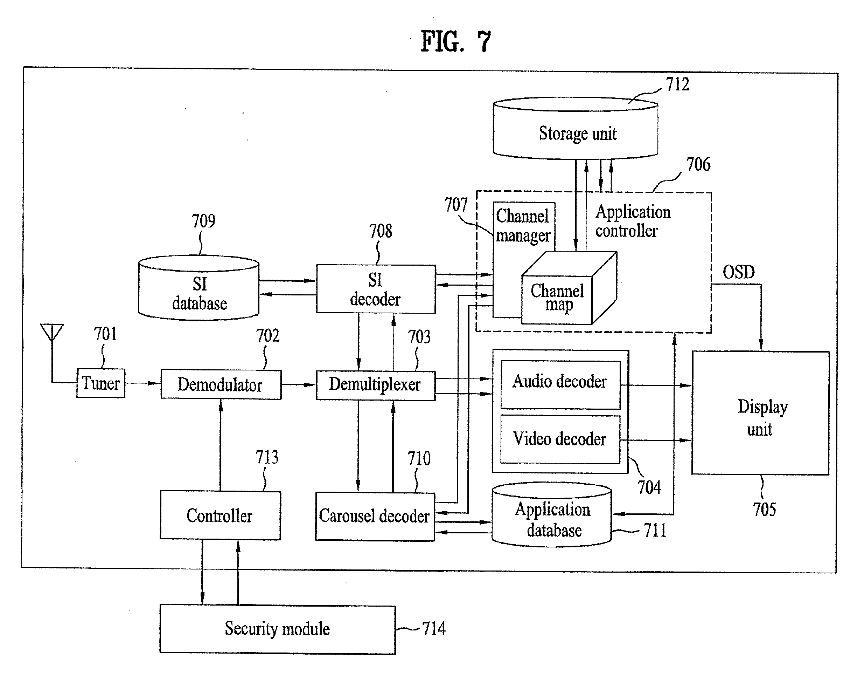

FIG. 7 is a block diagram illustrating a data broadcast receiver according to the present invention.

Referring to FIG. 7 the data broadcast receiver according to the present invention includes a tuner 701, a demodulator 702, a demultiplexer 703, an audio/video (A/V) decoder 704, a display unit 705, an application controller 706, a system information (SI) decoder 708, a system information (SI) database 709, a carousel decoder 7110, an application database 711, a storage unit 712, and a controller 713. And, a security module 714 may also be connected to an external part of the data broadcast receiver. The application controller 106 may include a channel manager 707. The storage unit 712 can be a NVRAM or flash memory.

For example, the data broadcast receiver may be a digital television receiver. The digital television receiver may receive not only an A/V broadcast signal but also application property information contained in the application information table (AIT), and may then process the A/V broadcast signal and the application property information.

And, the data broadcast receiver may control the additional service of the corresponding application according to the application property information.

The tuner 701 receives the data broadcast signal which includes the application information table (AIT) and the application. This tuner 701 corresponds to the receiver.

In other words, the tuner 701 may receive a terrestrial or cable broadcast signal by performing the frequency tuning of a specific channel, and the received broadcast signal may be transmitted to the demodulator 702.

In this case, the tuner 701 may receive a control signal from the channel manager 707, or may inform the channel manager 707 of the result and strength of the received signal acquired by the control signal. The broadcast signal may include not only the A/V broadcast signal but also the data broadcast signal.

The broadcast signal may include not only the application supported by the data broadcast platform but also the application information table indicating the application information. The application information table (AIT) may include the application property information.

The demodulator 702 demodulates the tuned broadcast signal generated from the tuner 701, and transmits the demodulated result to the demultiplexer 703. The output signal demodulated by the demodulator 702 is configured in the form of a transport stream.

In this case, the terrestrial broadcast signal and the cable broadcast signal have different transmission schemes, and the demodulator 702 according to the present invention may also perform a variety of demodulation processes of signals based on different demodulation schemes.

For example, the terrestrial broadcast signal may be demodulated by the 8VSB (8 Vestigial Sideband Modulation) scheme. The cable broadcast signal may be demodulated by any one of 64QAM, 256QAM, and 16VSB schemes. The demodulation scope of the present invention is not limited to only the above-mentioned examples, and can also be applied to other examples.

The demultiplexer 703 may demultiplex a transport stream demodulated by the demodulator 702. In other words, the demultiplexer 703 receives the transport stream from the demodulator 702, and may filter audio data, video data, and other data associated with the data broadcasting. The demultiplexer 703 transmits the filtered audio/video data to the A/V decoder 704, and transmits data for the data broadcasting to the carousel decoder 710.

In this case, the demultiplexer 703 receives a control signal from the SI decoder 708 and/or the carousel decoder 710, and may demultiplex the received transport stream using the control signal.

The demultiplexer 703 may demultiplex the received transport stream upon receiving a control signal from the channel manager 707. In other words, if the A/V PID (Packet Identifier) of a corresponding virtual channel is set, the demultiplexer 703 transmits only the A/V elementary stream to the A/V decoder 704.

The A/V decoder 704 receives the A/V elementary stream from the demultiplexer 703, and decodes the received A/V elementary stream according to the MPEG-2 or AC3 scheme.

The A/V data decoded by the A/V decoder 704 is displayed on the display 705. For example, if the A/V data decoded by the A/V decoder 704 is video data, the display 705 displays the video data on the screen. If the A/V data decoded by the A/V decoder 704 is audio data, the display 705 outputs the audio data via a speaker. The display 750 may receive a control signal of OSD (On Screen Display) graphic data when the video data is displayed on the screen.

Upon receiving tables, including audio information, video information, and other information associated with the data broadcasting, from the transport stream, the demultiplexer 703 may demultiplex the received tables, and may then transmit the demultiplexed tables to the SI (System Information) decoder 708.

In this case, the demultiplexer 703 examines the header part commonly contained in the individual tables, so that it may demultiplex the individual tables. The tables may be PSI/PSIP tables for the A/V broadcast service, or may be application information tables for the data broadcast service.

The channel manager 707 contained in the application controller 706 manages the channel map, and controls the tuner 701 and the SI decoder 708, so that it may answer the user's channel request.

The application controller 706 correponds to the middleware engine of FIG. 1, and several applications of the application layer (a) shown in FIG. 1 are stored in the application database 711.

The channel manager 707 requests the parsing of the channel-associated table from the SI decoder 708, receives the parsing result, and updates the channel map. And, the channel manager 707 establishes the A/V PID acquired by the parsing of the channel-associated table in the demultiplexer 703, and may then request the demultiplexing of data.

The SI decoder 708 is used as a SI control module for parsing the PSI/PSIP-associated table section generated from the demultiplexer 703, and may perform the slave operation upon receiving a control signal from the channel manager 707.

In other words, the SI decoder 708 may control the demultiplexer 703 to perform parsing of the PSI/PSIP-associated table section contained in the broadcast signal. And, the SI decoder 708 may store the parsing-resultant information in the SI database 709. In this case, the SI decoder 708 performs parsing of the non-filtering part or the remaining actual section data of the non-filtered part from the demultiplexer 703, namely, the decoder 708 reads all of data from the non-filtering part or the remaining actual section data from the demultiplexer 703, so that the read information may be stored in the SI database 709.

The SI decoder 708 may control the demultiplexer 703 to perform parsing of the application information table (AIT) contained in the broadcast signal. The SI decoder 708 outputs the parsing result of the application information table (AIT) to the application controller 706. The SI decoder 708 may store the parsing result of the application information table (AIT) in the application database 711 or the storage unit 712, or may monitor the presence or absence of update information.

If the update situation occurs, the SI decoder 708 re-analyzes the corresponding part to be updated, so that the information stored in the application database 711 can be always updated with new information.

The carousel decoder 710 receives the data broadcast - associated stream from the demultiplexer 703, decodes the received stream (e.g., the data broadcast application), and stores the decoded result in the application database 711 or outputs the decoded result to the application controller 706. Also, upon receiving a control signal from the channel manager 707, the carousel decoder 710 may perform the slave operation in the same manner as in the SI decoder 708. The carousel decoder 710 may have the same meaning as the data decoder.

The application controller 106 may detect the application property information from the application property field and/or the application property descriptor contained in the parsed application information table generated from the SI decoder 708, and may control the additional service of the corresponding application according to the detected application property information.

In other words, if the application controller 706 receives the application execution request from the platform, and detects the property information indicating the recordable status of the application from the application information table (AIT), the application controller 706 executes the application, and at the same time queries user for specific information indicating whether the application will be recorded or not.

If the user selects the recording of the above-mentioned application, the application controller 706 stores the application in the storage unit 712. Then, if the user transmits the execution request of the application, the application controller 706 reads the corresponding application stored in the storage unit 712, and executes the read application.

When the application controller 706 requests recordable or non-recordable status information from the user, it may display the requested information on the display 705 by controlling the generation of OSD. In other words, the application controller 706 controls the OSD generation to receive the user's selection signal according to the application property information. The additional service controlled by the application controller 706 has already been disclosed in the above-mentioned descriptor along with the method for processing the data broadcast signal.

In other words, the application controller 706 manages the application status and the database, and may manage or control the OSD associated with the data broadcasting.

Also, the application controller 706 controls the channel manager 707, so that it may perform the channel-associated operations (e.g., the channel map management or the SI decoder management). The GUI control of the broadcast receiver, the user request, and the status of the broadcast receiver may be stored in the storage unit 712, or may be recovered.

In the meantime, the broadcast receiver may also be associated with the demodulation of the broadcast signal received via the security module 714 connected to an external part. For example, if the scramble is loaded on the demodulated broadcast signal, the security module 714 may descramble the scrambled broadcast signal, and may output the descrambled result to the demultiplexer 703. For this operation, the security module 714 may include a conditional access system (CAS).

For example, if the broadcast receiver is able to receive the cable broadcast signal, the security module 714 may be set to the cable card. For another example, if the broadcast receiver is able to receive the satellite broadcast signal, the security module 714 may be set to the smart card. The security module 714 may be detachably connected to the broadcast receiver.

The security module 714 according to the present invention includes the CAS, and is detachably connected to the broadcast receiver. In this case, the broadcast signal generated from the broadcast station may be descrambled by the CAS of the security module 714, and the descrambled result is provided to users.

However, according to yet another embodiment, the present invention downloads the software CAS of the broadcast station in the broadcast receiver, so that it may perform the conventional CAS function.

In other words, the software CAS downloaded from the broadcast station may be stored in a predetermined memory of the broadcast receiver. However, the above-mentioned example has been disclosed only for illustrative purposes, and the difference in the above-mentioned embodiments may not affect or modify the scope of the present invention, so that various modifications and variations can be made in the present invention without departing from the spirit or scope of the invention.

As apparent from the above description, the data broadcast processing apparatus and method according to the present invention has the following effects.

Firstly, the present invention can provide a variety of application services based on the application properties.

Secondly, the present invention provides recordable information of the application. The present invention receives the user's selection signal associated with the recordable application, and may store the recordable application in the storage medium. Thereafter, the present invention may execute the application stored in the storage medium.

Thirdly, the present invention provides the execution rating information, so that it may perform the RRT function.

Fourthly, the present invention provides category information of the application, so that the individual applications can be differently performed or controlled according to individual application categories.

Fifthly, the present invention provides runtime information of the application, so that the user can effectively view the corresponding application.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A method for receiving/processing a data broadcast signal supported by a data broadcast platform comprising:
receiving a data broadcast signal including an application information table and an application;
detecting property information indicating a property of the application from the application information table; and
controlling an additional service of the application based on the detected application property information.

2. The method according to claim 1, wherein the application property information is contained in at least one of common and application loops of the application information table.

3. The method according to claim 1, wherein the application property information is contained in at least one of an application property field and an application property descriptor.

4. The method according to claim 1, wherein the application property information includes at least one of recordable information, execution rating information, category information, and runtime information.

5. The method according to claim 4, further comprising:
receiving a recording selection signal indicating a recordable or non-recordable status of a corresponding application based on the recordable information, when the application property information includes the recordable information

6. The method according to claim 5, further comprising:
receiving the recording selection signal associated with the application, storing the application in a storage medium; and
then if an execution request of the application occurs, reading the corresponding application stored in the storage medium, and executing the read application.

7. The method according to claim 4, further comprising:
displaying an age of a viewable user on the basis of the execution rating information, when the application property information includes the execution rating information.

8. The method according to claim 4, further comprising:
displaying an application preview on the basis of the category information, when the application property information includes the category information.

9. The method according to claim 4, further comprising:
providing an application list for each category on the basis of the category information, when the application property information includes the category information.

10. The method according to claim 4, further comprising:
controlling a reserved recording of a recordable application on the basis of the runtime information, when the application property information includes the runtime time.

11. An apparatus for receiving and processing a data broadcast signal supported by a data broadcast platform comprising:
a receiving unit for receiving a data broadcast signal including an application information table and an application;
a decoder for decoding the received application information table and the received application; and
an application controller for detecting property information indicating a property of the application from the decoded application information table, and controlling an additional service of the application on the basis of the detected application property information.

12. The apparatus according to claim 11, wherein the application property information is contained in at least one of common and application loops of the application information table.

13. The apparatus according to claim 11, wherein the application property information is contained in at least one of an application property field and an application property descriptor.

14. The apparatus according to claim 11, wherein the application property information includes at least one of recordable information, execution rating information, category information, and runtime information.

15. The apparatus according to claim 14, wherein the application controller, if the application property information includes the recordable information, receives a recording selection signal indicating a recordable or non-recordable status of a corresponding application on the basis of the recordable information.

16. The apparatus according to claim 15, wherein the application controller stores the application in a storage medium upon receiving the recording selection signal associated with the application; and then if an execution request of the application occurs, reads the corresponding application stored in the storage medium and executes the read application.

17. The apparatus according to claim 14, wherein the application controller, if the application property information includes the execution rating information, displays an age of a viewable user on the basis of the execution rating information.

18. The apparatus according to claim 14, wherein the application controller, if the application property information includes the category information, displays an application preview on the basis of the category information.

19. The apparatus according to claim 14, wherein the application controller, if the application property information includes the category information, provides an application list for each category on the basis of the category information.

20. The apparatus according to claim 14, wherein the application controller, if the application property information includes the runtime time, controls a reserved recording of a recordable application on the basis of the runtime information.
